(19) **Europäisches Patentamt**
**European Patent Office**
**Office européen des brevets**

(11) **EP 1 992 503 B1**

(12) **EUROPEAN PATENT SPECIFICATION**

(45) Date of publication and mention
of the grant of the patent:
**28.04.2010 Bulletin 2010/17**

(51) Int Cl.:
*B60C 11/03* *(2006.01)*    *B60C 19/00* *(2006.01)*

(21) Application number: **08008591.3**

(22) Date of filing: **07.05.2008**

(54) **Pneumatic tire with asymmetric tread pattern**

Luftreifen mit asymmetrischem Laufflächenprofil

Pneu avec profilé asymmétrique

(84) Designated Contracting States:
**FR GB**

(30) Priority: **17.05.2007 JP 2007131865**

(43) Date of publication of application:
**19.11.2008 Bulletin 2008/47**

(73) Proprietor: **Sumitomo Rubber Industries, Ltd.**
**Kobe-shi**
**Hyogo-ken (JP)**

(72) Inventor: **Nakano, Keita**
**Kobe-shi,**
**Hyogo-ken (JP)**

(74) Representative: **Manitz, Finsterwald & Partner**
**GbR**
**Postfach 31 02 20**
**80102 München (DE)**

(56) References cited:
**EP-A- 1 110 761    US-B1- 6 607 018**

**Description**

BACKGROUND OF THE INVENTION

Field of the Invention

The present invention relates to a pneumatic tire suitable for running on off-road such as rally and dirt trial, and more particularly, to a pneumatic tire which satisfies both traction performance and lateral grip performance.

Description of the Related Art

A pneumatic tire for running an off-road is used for rally and/or and dirt trial competition. To shorten the lap time, the pneumatic tire of this kind is required to have excellent traction performance for gripping an off-road surface and transmitting a driving force to the road surface, and excellent lateral grip performance for suppressing lateral slip of tire at the time of cornering. To satisfy both the traction performance and the lateral grip performance, various proposals have conventionally been made for blocks provided on a tread and/or shape of groove.

However, the conventional tire has a problem that the lateral grip performance is inferior and the lateral slip is relatively great.

A tire according to the pre-characterizing portion of claim 1 is known from US-B1-6 607 018. Further relevant prior art is known from EP-A-1 110 761.

SUMMARY OF THE INVENTION

The present invention has been accomplished in view of such circumstances, and it is a main object of the invention to provide a pneumatic tire in which a tread portion includes a plurality of inclined longitudinal grooves being inclined toward the inside of the vehicle while extending toward a traveling direction of the vehicle, an angle of the inclined longitudinal groove with respect to a circumferential direction of the tire becomes greater toward outer side of the vehicle, edges of the inclined longitudinal grooves function effectively at the time of cornering, and the traction performance and the lateral grip performance are satisfied at high level.

This object is achieved by the pneumatic tire of claim 1.

According to the pneumatic tire of the invention with the block pattern in which the plurality of blocks are divided on the tread portion, each block bites into a road surface in the off-road running such as mud flat and sand, and high traction performance is exhibited.

According to the pneumatic tire of the invention, the longitudinal groove includes the inclined longitudinal grooves extending while inclining inward of the vehicle forward in the traveling direction when the tire is mounted on the vehicle, and the angle of the inclined longitudinal grooves with respect to the circumferential direction of the tire is set greater toward outer side of the vehicle. At the time of cornering when a slip angle is applied to the tire, the center of the ground-contact region of the tread portion of the outer tire moves to the outside in proportion to the value of the slip angle. Therefore, at the time of cornering with the slip angle, the inclined longitudinal grooves can come into contact with the road surface in a state where the inclined longitudinal grooves become close to parallel with the traveling direction of the vehicle. That is, the edges of the inclined longitudinal grooves can come into contact with the ground while angles thereof become close to a direction intersecting with the lateral slip direction of the vehicle. with this configuration, high friction force with respect to the road surface is obtained during the cornering, and the lateral grip performance is enhanced.

BRIEF DESCRIPTION OF THE DRAWINGS

Fig. 1 is a plan view showing an arrangement construction in which the tires of the present embodiment of the present invention mounted on a vehicle, as viewed from above;
Fig. 2 is a plan view of a tread pattern of the left front wheel;
Fig. 3 is an enlarged view of a portion of Fig. 2;
Fig. 4 is a diagram partially showing a footprint of a tread portion of the pneumatic tire of the present embodiment; and

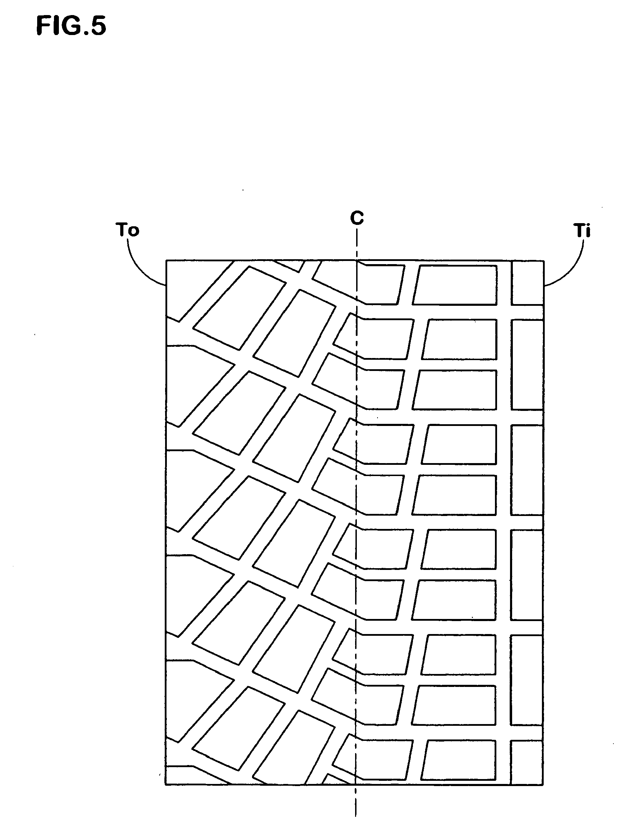

Fig. 5 is a development view of a tread pattern of a reference.

DETAILED DESCRIPTION OF THE PREFERRED EMBODIMENTS

one embodiment of the present invention will be explained below based on the drawings.

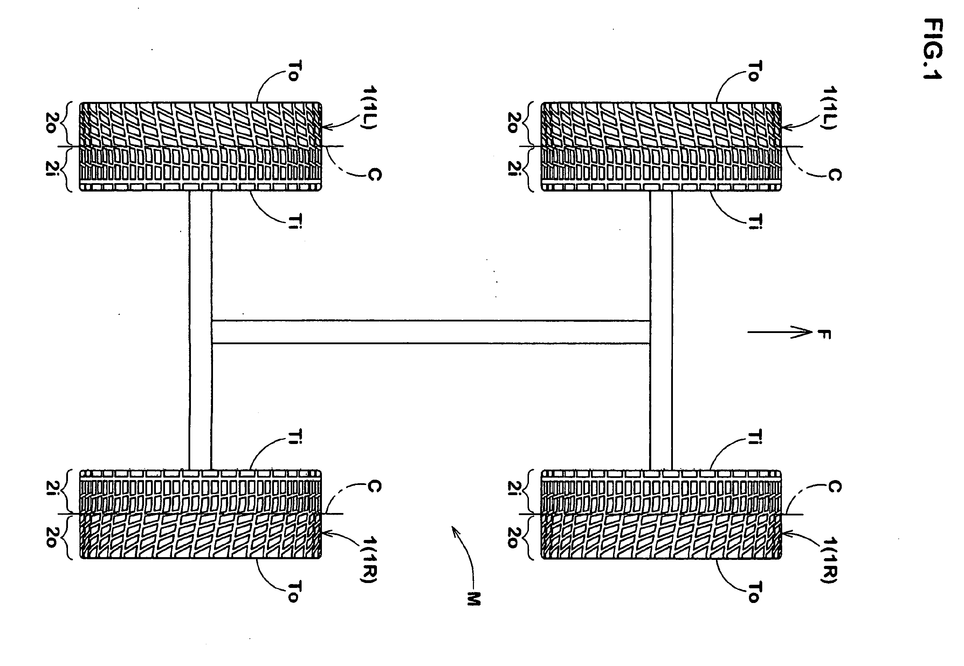

Fig. 1 is a plan view of a vehicle M in which pneumatic tires 1 of the present embodiment are mounted on four wheels. The vehicle M is a front-wheel steering four-wheel vehicle, and a symbol F represents a traveling direction thereof (a forward direction).

The pneumatic tire 1 of the present embodiment is a tire for off-road which has a tread pattern being designated directions to an inside and an outside of the vehicle M when the tire is mounted on the vehicle M. Namely, the tire 1 is designated both a rotation direction and a wheel on which the tire 1 is to be mounted (a right wheel 1R or a left wheel 1L) so that the effect of the tread pattern formed on the tread portion 2 can be exhibited most effectively. In this embodiment, the tire 1 has an identifying means to identify the directions by means of characters and/or a sign on its sidewall portion (not shown). For example, the characters include the words of "INSIDE" and/or "OUTSIDE", and the sign includes an arrow sign for identifying the rotation direction. Accordingly, the tire 1 according to the present embodiment can be identified to such directions without mounting on the vehicle M.

when mounting on the vehicle, the tread portion 2 includes an inner tread 2i forming a region from a tire equator C to an inner tread edge Ti corresponding to the inside of the vehicle M, and an outer tread 2o forming a region from the tire equator C to an outer tread edge To corresponding to the outside of the vehicle M. The inner tread 2i and the outer tread 2o have different patterns. with this configuration, the tread portion 2 is formed with so-called an asymmetrical pattern. Further, the asymmetrical pattern includes a first pattern for right tires and second pattern for left wheels. These first and second patterns are symmetrical with respect to the center line of the vehicle.

Here, the tread edges Ti and To are ground-contact ends on an outermost sides in the tire axial direction when the tire is mounted on a standard rim and inflated to a standard pressure and a standard load is applied thereto, and the tire is brought into a flat surface at a camber angle of 0 degree.

Also, the standard wheel rim is a wheel rim officially approved for the tire by standard organization, i.e. JATMA (Japan and Asia), T&RA (North America), ETRTO (Europe) and the like. The standard pressure is the maximum air pressure for the tire specified by the same organization in the Air-pressure Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various Cold Inflation Pressures" table in TRA or the like. The standard load is the "maximum load capacity" in JATMA, 88% of the "Load capacity" in ETRTO, the maximum value given in the above-mentioned table in TRA or the like. when any of these specifications do not exist, a recommended value of a tire maker is applied.

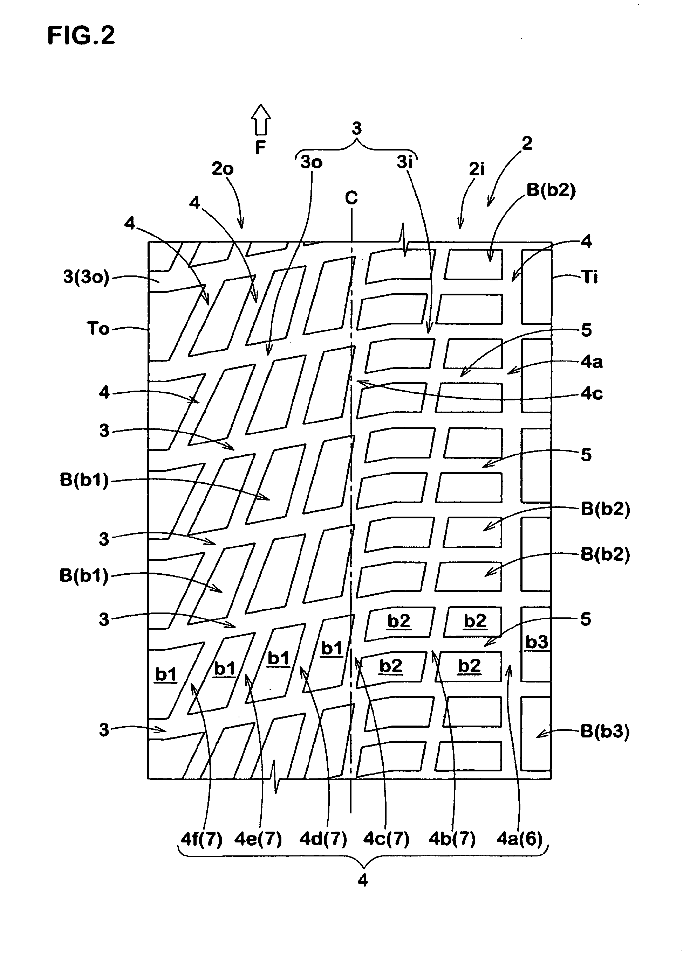

As shown in Fig. 2, the tread portion 2 is provided with a plurality of lateral grooves 3 extending in the axial direction of the tire and separated from each other in the circumferential direction of the tire, and a plurality of longitudinal grooves 4 connecting between the lateral grooves 3 and separated from each other in the axial direction of the tire. with this configuration, the tread portion 2 is formed with a block pattern having a plurality of blocks B. The blocks of the block pattern sufficiently bite into a road surface in a mud flat or sand, and high traction performance can be exhibited.

The groove widths and groove depths of the lateral grooves 3 and the longitudinal grooves 4 are not especially limited, but if they are too small, there is an adverse possibility that the traction performance on a soft road such as mud flat is deteriorated. From such a viewpoint, it is preferable that the groove widths of the lateral grooves 3 and the longitudinal grooves 4 (as measured at right angles with respect to the groove center line) are not less than 5 mm, more preferably not less than 8 mm. similarly, it is preferable that the groove depths of the lateral grooves 3 and the longitudinal grooves 4 are not less than 8 mm and more preferably not less than 10 mm.

If the groove widths or groove depths of the lateral grooves 3 and the longitudinal grooves 4 are too great, there is an adverse possibility that the traction performance is deteriorated on a hard soil road. From such a viewpoint, it is preferable that the groove widths of the lateral grooves 3 and the longitudinal grooves 4 are not more than 15 mm, and more preferably not more than 12 mm. similarly, it is preferable that the groove depths of the lateral grooves 3 and the longitudinal grooves 4 are not more than 11.5 mm.

The lateral groove 3 includes an inner lateral groove 3i extending across the inner tread 2i in the axial direction of the tire, and an outer lateral groove 3o extending across the outer tread edge 2o in the axial direction of the tire. concerning the lateral groove, the expression "extending in the axial direction of the tire" does not have narrow meaning that "the groove extends in parallel to the axial direction of the tire", but meaning that "the groove may incline with respect to the axial direction of the tire" of course.

In this embodiment, the inner lateral groove 3i and the outer lateral groove 3o are substantially straight, and are in communication with each other at the tire equator C. with this configuration, the lateral groove 3 continuously extends from the outer outer tread edge To to the inner tread edge Ti without being cut. However, the lateral grooves 3i and 3o are not limited to the grooves which are in communication with each other.

The vehicle M of the present embodiment has suspensions each with a negative camber. The pneumatic tire 1 of the present embodiment is suitably utilized for a vehicle having such a negative camber. The negative camber is a fitting mounted such that the tire (especially front tire) is inclined outward of the vehicle from above to below as viewing the vehicle M from front. In the case of a vehicle M having a negative camber, the inner tread 2i of the tread portion 2 comes into contact with a road surface more when the vehicle runs straight. Therefore, in order to obtain sufficient traction performance when the vehicle runs straight, it is preferable that a major part of the inner lateral groove 3i extends in parallel to the axial direction of the tire at not more than 20 degrees with respect to the axial direction of the tire, more preferably not more than 10 degrees, more preferably in parallel to the axial direction of the tire. Also, the major part of the inner lateral groove 3i means preferably not less than 60 %, more preferably not less than 70 % of the entire length of the essential portion of the inner lateral groove 3i.

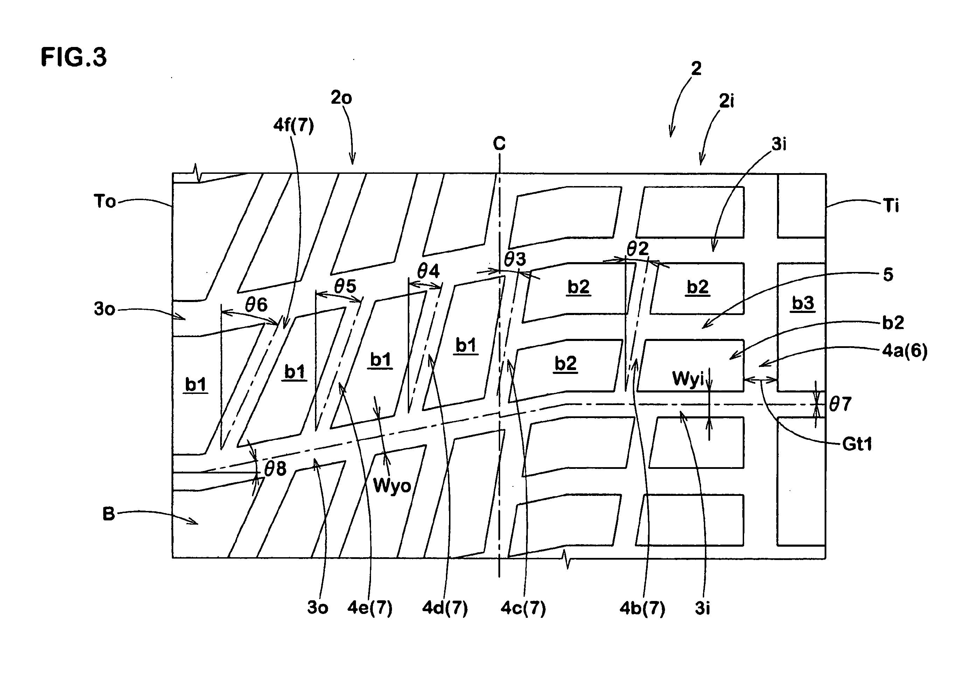

on the other hand, concerning the outer tire at the time of cornering of the vehicle M (e.g., the left wheel when the vehicle turns rightward), the outer tread 2o of the tread portion 2 easily come into contact with a road surface more. Thus, in order to generate a friction force utilizing the edge of the outer lateral groove 3o during cornering, a major part of the outer lateral groove 3o, e.g., not less than 60% of the outer lateral groove 3o, more preferably not less than 70% thereof is inclined inward of the vehicle forward F and extended. As shown in Fig.3, the angle θ8 (theta 8) of the outer lateral groove 3o with respect to the axial direction of the tire is not especially limited, but the angle θ8 is preferably not less than 1 degree, more preferably not less than 10 degrees. If the angle θ8 is too large, there is an adverse possibility that the stability and block rigidity when the vehicle runs straight are deteriorated. From such a viewpoint, it is preferable that the angle θ8 is not more than 30 degrees, and more preferably not more than 25 degrees.

In this embodiment, six longitudinal grooves 4 are provided between the lateral grooves 3, 3. That is, as shown in Fig. 2, the longitudinal grooves 4 include a first longitudinal groove 4a, a second longitudinal groove 4b, a third longitudinal groove 4c, a fourth longitudinal groove 4d, a fifth longitudinal groove 4e and a sixth longitudinal groove 4f which are disposed in this order from the side of the inner tread edge Ti to the outer tread edge To. In this embodiment, these longitudinal grooves 4 extend substantially straight without being bent.

In this embodiment, the inner tread 2i is provided with two longitudinal grooves 4 including the first longitudinal groove 4a and the second longitudinal groove 4b. The outer tread 2o is provided with three longitudinal grooves 4 including the fourth longitudinal groove 4d, the fifth longitudinal groove 4e and the sixth longitudinal groove 4f. The third longitudinal groove 4c extends in a location closest to the tire equator C. In this embodiment, the third longitudinal groove 4c extends across the tire equator C and astride the inner tread 2i and the outer tread 2o.

The longitudinal grooves 4 comprise at least two inclined longitudinal grooves 7 each between the lateral grooves 3, 3. As viewed from above when the tire 1 is mounted on the vehicle, the inclined longitudinal grooves 7 are inclined toward the inside of the vehicle M while extending toward the traveling direction F of the vehicle M. Also, each inclined longitudinal groove 7 has a different angle with respect to the circumferential direction of the tire, and each angle of the inclined longitudinal groove 7 becomes larger toward the outside of the vehicle M.

In this embodiment, the first longitudinal groove 4a disposed closest to an innermost tread edge Ti is formed as a circumferential longitudinal groove 6 extending in parallel to the circumferential direction of the tire. The second to sixth longitudinal grooves 4b to 4f are formed as the inclined longitudinal grooves 7. As shown in Fig. 3, when the angles of the second to sixth longitudinal grooves 4b to 4f formed between themselves and the circumferential direction of the tire are defined as angles θ2 to θ6, these angles are set such that the following relation equation (1) is satisfied:

$$\theta2 < \theta3 < \theta4 < \theta5 < \theta6 \quad \cdots \ (1).$$

When the angle of the inclined longitudinal groove 7 is varied, the angle of the inclined longitudinal groove 7 with respect to the circumferential direction of the tire is obtained as a weighted average angle to which weight is assigned with a groove length.

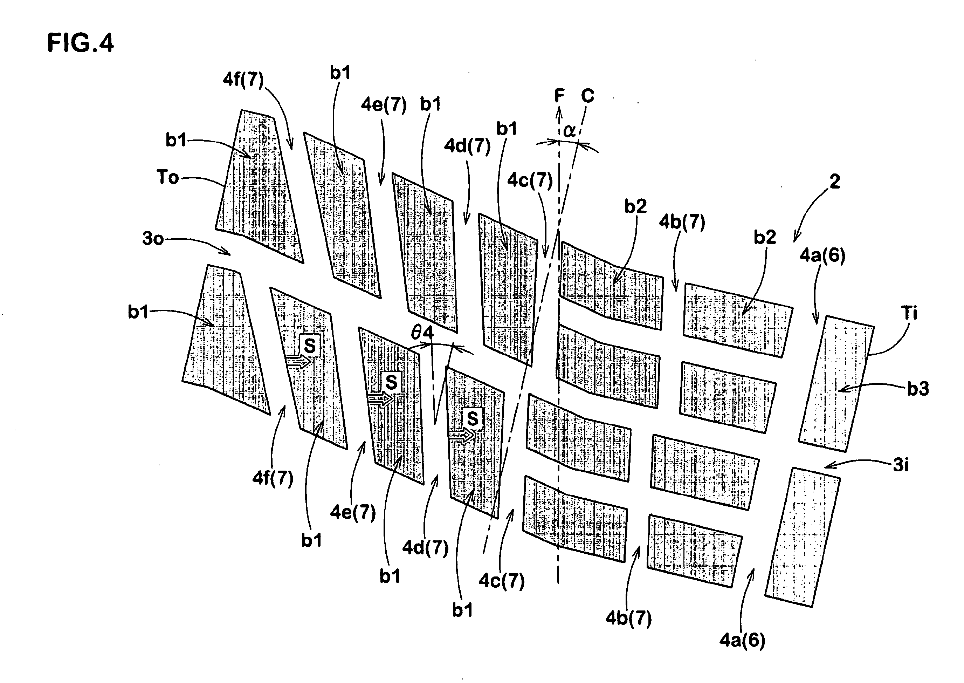

Fig. 4 shows a ground-contact surface shape (perspective view of a ground-contact region of the tread portion as viewed from a rotation axis of the tire) in a state where the pneumatic tire 1 shown in Fig. 2 is in contact with a road surface with a slip angle alpha. when the vehicle starts turning, a slip angle alpha is applied to the tire 1. The slip angle alpha is an angle formed between the vehicle straight running direction F and the tire equator c. concerning a tire 1 located on the outer side of cornering, the ground-contact region of the tread portion 2 moves outward of the vehicle substantially in proportional to the value of the slip angle alpha. Therefore, when the slip angle alpha is applied, the inclined longitudinal groove 7 can come into contact with the road surface in a state where the inclined longitudinal groove 7 comes close to parallel to the straight traveling direction F of the vehicle M in accordance with the slip angle alpha.

For example, Fig. 4 shows a case in which a slip angle alpha being equal to an angle θ4 of the fourth longitudinal groove 4d is given. If the ground-contact region includes the fourth longitudinal groove 4d, the fourth longitudinal groove 4d can come into contact with the road surface in a state where the fourth longitudinal groove 4d is substantially in parallel to the vehicle straight running direction F. In other word, the edge of the fourth lateral groove 4d comes into contact wit the road surface in a sate where the greatest friction force s (resistance) can be exhibited in a lateral slipping direction of the vehicle.

when a greater slip angle alpha is given, the center of the ground-contact region of the tread portion 2 moves toward the outer tread edge To. At that time, the angle θ5 of the fifth longitudinal groove 4e which mainly comes into contact with the road surface with respect to the circumferential direction of the tire is also increased. Thus, even if the slip angle alpha is increased, the effect similar to the above is passed down to the fifth longitudinal groove 4e or sixth longitudinal groove 4f and is exhibited. In this manner, the pneumatic tire 1 of the present embodiment can exhibit high lateral grip performance at the time of cornering.

when the vehicle runs straight, the ground-contact region of the tread portion 2 is mainly close to the inner tread 2i. Since the longitudinal groove 4 closer to the inner side of the vehicle has a relatively smaller angle with respect to the circumferential direction of the tire, the tire 1 of the present embodiment can prevent the straight running stability from being deteriorated.

The advantageous working effect can be obtained by providing at least two inclined longitudinal grooves 7 between the lateral grooves 3 and by increasing the angle of the inclined longitudinal grooves 7 with respect to the circumferential direction of the tire such that an inclined longitudinal groove 7 located on the outer side has a greater angle. That is, the advantageous effect can be obtained by satisfying at least one of the following relations (2) to (5):

$$\theta 2 < \theta 3 \qquad \ldots (2)$$

$$\theta 3 < \theta 4 \qquad \ldots (3)$$

$$\theta 4 < \theta 5 \qquad \ldots (4)$$

$$\theta 5 < \theta 6 \qquad \ldots (5)$$

However, in the pneumatic tire 1 located on the outer side of the cornering state, the center of the ground-contact region of the tread portion 2 moves toward the outer tread edge To. Therefore, in order to exhibit the above effect more effectively, it is preferable that not less than two, more preferably not less than three inclined longitudinal grooves 7 are provided on the outer tread edge 2o. when a condition of the vehicle such as the camber angle is taken into consideration, the inner tread 2i may be provided with the circumferential longitudinal groove 6 only, and the inclined longitudinal grooves 7 need not be provided.

The slip angle alpha given to the pneumatic tire 1 at the time of cornering is 30 degrees at the most. Therefore, it is preferable that the angles θ2 to θ6 of the longitudinal groove 4 including the inclined longitudinal groove 7 with respect to the circumferential direction of the tire is not more than 30 degrees, and more preferably not more than 25 degrees.

A difference between angles of inclined longitudinal grooves 7 which are adjacent in the axial direction of the tire ($\theta_i - \theta_{i-1}$) (wherein, i is an integer not less than 2) is not especially limited. However, if the difference of angles is too small, there is an adverse possibility that the lateral grip performance can not be sufficiently enhanced if the slip angle alpha is increased. From such a viewpoint, the difference of angles ($\theta_i - \theta_{i-1}$) is preferably not less than 1 degrees, and more preferably not less than 3 degrees. If the difference of angles ($\theta_i - \theta_{i-1}$) is too large on the other hand, the pattern rigidity is abruptly changed in the axial direction of the tire, and there is an adverse possibility that the resistance to wear is deteriorated. From such a viewpoint, it is preferable that the difference of angles ($\theta_i - \theta_{i-1}$) is not more than 10 degrees, and more preferably not more than 6 degrees. In this embodiment, the third longitudinal groove 4c to sixth longitudinal groove 4f are disposed at substantially constant distances from one another in the axial direction of the tire (as measured from front ends of the longitudinal grooves 4c to 4f), and the difference of angles ($\theta_i - \theta_{i-1}$) are also set substantially constant.

As shown in Fig. 2, a plurality of (concretely, four) long blocks b1 having a circumferential length being greater than its axial length of the tire are formed between the outer lateral grooves 3o. such long blocks b1 have high rigidity in the circumferential direction of the tire. Therefore, the traction performance can sufficiently be enhanced when the vehicle runs straight. The long blocks b1 have edges which are long in the circumferential direction of the tire (edges of the inclined longitudinal grooves 7). Therefore, the lateral grip performance can further be enhanced effectively.

If the number of inclined longitudinal grooves 7 between the outer lateral grooves 3o are increased, the rigidity of the long blocks b1 in the axial direction of the tire are largely deteriorated, and there is an adverse possibility that the edge can not effectively be utilized. From such a viewpoint, the number of inclined longitudinal grooves 7 provided between the outer lateral grooves 3o is preferably not more than 5, and more preferably not more than 4. The inclined longitudinal grooves 7 disposed between the outer longitudinal grooves 3o do not include a groove extending across the tire equator C.

As shown in Fig. 3, the inner tread 2i is provided with auxiliary lateral grooves 5. Each of the auxiliary lateral grooves 5 extends in the axial direction of the tire from the first longitudinal groove 4a toward the tire equator C. The auxiliary lateral groove 5 is in communication with the third longitudinal groove 4c which extends across the tire equator C, and the auxiliary lateral groove 5 is terminated thereto. The auxiliary lateral groove 5 is provided at substantially intermediate position between the inner lateral grooves 3i, 3i which are adjacent in the circumferential direction of the tire. In this embodiment, a distance between the longitudinal grooves 4 provided in the inner tread 2i in the axial direction of the tire is set greater than the longitudinal groove 4 extending in the outer tread 2o.

with this configuration, a plurality of inner blocks are provided on the inner tread 2i which include short blocks b2 having a circumferential length being smaller than the axial length, and long blocks b3 located between the inner tread edge Ti and the first longitudinal groove 4a.

when the vehicle M with the negative camber runs straight, the inner tread portion 2i comes into road surface more. Therefore, in order to sufficiently exhibit the traction performance when the vehicle runs straight, a major part of the auxiliary lateral groove 5, e.g., not less than 60% of the auxiliary lateral groove 5, more preferably not less than 70% of the auxiliary lateral groove 5 makes not more than 20 degrees with respect to the axial direction of the tire, more preferably not more than 10 degrees, and more preferably parallel to the axial direction of the tire like the inner lateral groove 3i.

The short block b2 has small rigidity in the circumferential direction of the tire. Therefore, it is preferable that the groove width wyi of the inner lateral groove 3i is smaller than a groove width wyo of the outer lateral groove 3o, and durability of the short block b2 is secured. This structure prevents the pattern rigidity of the inner tread 2i from being deteriorated, and the edge component of the short block b2 in the axial direction of the tire can be exhibited effectively. on the other hand, the long blocks b1 provided in the outer tread 2o has higher rigidity. Accordingly, by relatively increasing the groove width wyo of the outer lateral groove 3o (wyo > wyi), the ground-contact pressure of the long blocks b1 can be enhanced, and the excellent lateral grip performance can be exhibit when the vehicle M turns.

It is preferable that the groove width wyi of the inner lateral groove 3i and the groove width wyo of the outer lateral groove 3o (the groove widths are measured at right angles with respect to the groove center line) are formed substantially constantly. with this configuration, the ground-contact pressure acting on the edges of the lateral grooves 3i and 3o can be uniformed, and this can effectively prevent deviated wearing from being generated.

concerning the inside tire when the vehicle M turns (e.g., the right tire when turning rightward when steering to the right), the inner tread 2i comes into contact with the ground more, and the inner tread 2i is dragged outward of the turning motion. At that time, the long block b3 provided at an innermost side of the inner tread portion 2i functions as a resistance at the time of dragging and suppress the lateral slip. In order to enhance this effect to the utmost, it is preferable that the first longitudinal groove 4a extends in parallel to the circumferential direction of the tire.

when the vehicle M turns, a load applied to an inner tire of the turning motion is smaller than that applied to an outer tire of the turning motion. Thus, it is preferable that a groove width Gt1 of the first longitudinal groove 4a is made the greatest among the longitudinal grooves 4, the ground-contact pressure of the long inner block b3 is enhanced, and the lateral grip performance is also enhanced.

The second longitudinal groove 4b which is another longitudinal groove 4 provided in the inner tread portion 2i is formed as the inclined longitudinal groove 7 in this embodiment, but this second longitudinal groove 4b may be formed as a longitudinal groove 6 in the circumferential direction. when the second longitudinal groove 4b is formed as the inclined longitudinal groove 7, the angle θ2 of the second longitudinal groove 4b is preferably equal to or smaller than the angle θ3 of the third longitudinal groove 4c extending adjacently on the outer side of the vehicle.

Although the present embodiment of the present invention has been explained, the invention is not limited to the present embodiment, and the invention can be carried out in various modes of course.

Comparative Test:

Pneumatic tires (size: 205/65R15) having the specification shown in Table 1 were prototyped, and traction performance and lateral grip performance of the test tires were evaluated. Portions which are not described in Table 1 are the same in both embodiments and references.

The traction performance and lateral grip performance were evaluated on a scale from 1 to 5 (the higher the numeric value was, the better the result was) by a professional driver's feeling under a condition that the test tires were mounted to all wheels of a four-wheel drive vehicle (2000 cc) shown in Fig.1, the vehicle was allowed to run on an off-road (unpaved road) test course of 2.2 km length. The vehicle was of a negative camber, and its angle is 2 degrees.

The traction performance was evaluated mainly at the time of driving and deceleration when running straight. The lateral grip performance was evaluated comprehensively concerning initial response at the time of cornering, lateral slip during cornering, and grip feeling at the time of acceleration at a corner outlet. Time trial was carried out on the test course, and running time at that time was measured.

Results of the test are shown in Table 1.

Table 1

|  | Ref. 1 | Example | Ref. 2 |
|---|---|---|---|
| tread pattern | Fig. 5 | Fig. 2 | Fig. 2 |
| <Angles of grooves><br>First longitudinal groove $\theta 1$ (deg.)<br>Second longitudinal groove $\theta 2$ (deg.)<br>Third longitudinal groove $\theta 3$ (deg.)<br>Fourth longitudinal groove $\theta 4$ (deg.)<br>Fifth longitudinal groove $\theta 5$ (deg.)<br>Sixth longitudinal groove $\theta 6$ (deg.)<br>Inner lateral groove $\theta 7$ (deg.)<br>Outer lateral groove $\theta 8$ (deg.)<br>Auxiliary lateral groove $\theta 9$ (deg.) | -<br>-<br>-<br>-<br>-<br>-<br>-<br>-<br>- | 0<br>5<br>10<br>15<br>20<br>25<br>0<br>10<br>0 | 0<br>-20<br>-25<br>-20<br>-15<br>-10<br>0<br>10<br>0 |
| <Groove width><br>Inner lateral groove wyi (mm)<br>Outer lateral groove wyo (mm) | -<br>- | 10<br>10 | 10<br>10 |
| Traction performance | 3 | 3 | 3 |
| Lateral grip performance | 2 | 4 | 3 |
| Lap time (min/second) | 1'41.47 | 1'40.91 | 1'41.32 |
| * A direction of lateral angle which is inclined inward of vehicle forwardly as viewed from above of the tire is defined as positive. | | | |

As a result of the test, it could be confirmed that in the pneumatic tire of the example, the traction performance was not deteriorated, the lateral grip performance was largely enhanced and as a result, the running time could largely be shortened.

## Claims

1. A pneumatic tire (1) comprising
   a tread portion (2) provided with a plurality of lateral grooves (3) and a plurality of longitudinal grooves (4) extending between the lateral grooves (3) to form a block pattern having a plurality of blocks (B),
   the block pattern being designated directions to an inside and an outside of a vehicle and the rotation when the tire is mounted on the vehicle,
   the longitudinal grooves (4) comprising at least two inclined longitudinal grooves (7) each extending between the adjacent two lateral grooves (3), and
   when the tire (1) is mounted on the vehicle (M) and viewed from above,
   the inclined longitudinal grooves (7) being inclined toward the inside of the vehicle (M) while extending toward a traveling direction (F) of the vehicle (M),
   the inclined longitudinal grooves (7) having a different inclination angle ($\theta$) with respect to the circumferential direction of the tire (1), and
   each of the inclined longitudinal grooves (7) having a larger inclination angle ($\theta$) than that of the adjacent inner one,
   wherein the tread portion (2) comprises an axially inner tread (2i) forming a region from the tire equator (C) to an inner tread edge (Ti) corresponding to the inside of the vehicle (M),
   the lateral grooves (3) include a plurality of inner lateral grooves (3i) extending across the inner tread (2i),
   at least one of the longitudinal grooves (4) is a first longitudinal groove (4a) nearest the inner tread edge (Ti) and is provided between the adjacent two inner lateral grooves (3i) to form inner blocks (b2, b3) on the inner tread (2i),
   **characterized in that**,
   the inner tread (2i) is further provided with auxiliary lateral grooves (5) each extending in the axial direction of the tire (1) toward the tire equator (C) from the first longitudinal groove (4a) between the adjacent inner lateral grooves (3i), whereby the inner blocks (b2, b3) located between the adjacent inner lateral grooves (3i) includes:

> short blocks (b2) having a circumferential length smaller than its axial length on both sides of the auxiliary lateral groove (5), and
> a long block (b3) having a circumferential length greater than its axial length between the inner tread edge (Ti) and the first longitudinal groove (4a).

2. The pneumatic tire according to claim 1, wherein
the tread portion (2) comprises an axially outer tread (2o) forming a region from the tire equator (C) to an outer tread edge (To) corresponding to the outside of the vehicle (M),
the lateral grooves (3) include a plurality of outer lateral grooves (3o) extending across the outer tread (2o), and
at least three of the inclined longitudinal grooves (7) are provided between the adjacent two outer lateral grooves (3o) to form long blocks (b1) having a circumferential length being greater than its axial length on the outer tread (2o).

3. The pneumatic tire according to claim 2, wherein
the angle ($\theta$) of the longitudinal grooves (7) is not more than 30 degrees with respect to the circumferential direction of the tire,
the outer lateral grooves (3o) incline toward the inside of the vehicle (M) while extending toward the traveling direction (F), when the tire (1) is mounted on the vehicle (M) and viewed from above, and
the inclination angle ($\theta 8$) of the outer lateral grooves (3o) is not more than 30 degrees with respect to the axial direction of the tire (1).

4. The pneumatic tire according to claim 2, wherein
the tread portion (2) comprises an axially inner tread (2i) forming a region from the tire equator (C) to an inner tread edge (Ti) corresponding to the inside of the vehicle (M),
the lateral grooves (3) include a plurality of inner lateral grooves (3i) extending across the inner tread (2i),
at least one of the longitudinal grooves (4) is provided between the adjacent two inner lateral grooves (3i) to form inner blocks (b2, b3) on the inner tread (2i), and
the outer lateral grooves (3o) have a groove width greater than that of the inner lateral grooves (3i).

5. The pneumatic tire according to claim 1, wherein
the inner tread (2i) is provided with the longitudinal grooves (4) including the first longitudinal groove (4a) and a second longitudinal groove (4b) being next to the first longitudinal groove (4a),
the first longitudinal groove (4a) extends in parallel to the circumferential direction of the tire (1),
the second longitudinal groove (4b) extends between the adjacent lateral grooves (3) such as to be in parallel to the circumferential direction of the tire (1) or to incline toward the inside of the vehicle (M) while extending toward the traveling direction (F) when the tire (1) is mounted on the vehicle (M) and viewed from above, and
the angle ($\theta 2$) of the second longitudinal groove (4b) with respect to the circumferential direction of the tire (1) is not more than the angle ($\theta 4$) of the longitudinal groove (4d) adjacent to the second longitudinal groove (4b) outside of the vehicle (M).

6. The pneumatic tire according to claim 1, wherein the groove width of the first longitudinal groove (4a) is the greatest among the longitudinal grooves (4).

7. The pneumatic tire according to claim 5, wherein the groove width of the first longitudinal groove (4a) is the greatest among the longitudinal grooves (4).

8. The pneumatic tire according to claim 1, wherein
each longitudinal groove (4) extends substantially straight without bending.

9. The pneumatic tire according to claim 1, wherein
the number of the inclined longitudinal grooves (7) between the adjacent two lateral grooves (3) is at least three in a region from the tire equator (C) to an outer tread edge (To) corresponding to the outside of the vehicle (M).

10. The pneumatic tire according to claim 1, wherein
the tire (1) has an identifying means to identify the designated directions on its outer surface.

**Patentansprüche**

1. Luftreifen (1), umfassend

einen Laufflächenabschnitt (2), der mit einer Mehrzahl von Querrillen (3) und einer Mehrzahl von Längsrillen (4) versehen ist, die sich zwischen den Querrillen (3) erstrecken, um ein Blockprofil mit einer Mehrzahl von Blöcken (B) zu bilden,

wobei das Blockprofil ausgewiesene Richtungen zu einer Innenseite und einer Außenseite eines Fahrzeugs und der Drehung aufweist, wenn der Reifen auf das Fahrzeug aufgezogen ist,

die Längsrillen (4) zumindest zwei geneigte Längsrillen (7) umfassen, die sich jeweils zwischen den benachbarten zwei Querrillen (3) erstrecken, und

wobei, wenn der Reifen (1) auf das Fahrzeug (M) aufgezogen ist und von oben betrachtet wird,

die geneigten Längsrillen (7) zur Innenseite des Fahrzeugs (M) geneigt sind, während sie sich zur Fahrtrichtung (F) des Fahrzeugs (M) erstrecken,

die geneigten Längsrillen (7) einen unterschiedlichen Neigungswinkel ($\theta$) mit Bezug auf die Umfangsrichtung des Reifens (1) aufweisen, und

eine jede der geneigten Längsrillen (7) einen größeren Neigungswinkel ($\theta$) als der der benachbarten Inneren aufweist,

wobei der Laufflächenabschnitt (2) eine axial innere Lauffläche (2i) umfasst, die einen Bereich von dem Reifenäquator (C) zu einer inneren Laufflächenkante (Ti) entsprechend der Innenseite des Fahrzeugs (M) bildet,

die Querrillen (3) eine Mehrzahl von inneren Querrillen (3i) umfassen, die sich über die innere Lauffläche (2i) hinweg erstrecken,

zumindest eine der Längsrillen (4) eine erste Längsrille (4a) am nächsten bei der inneren Laufflächenkante (Ti) ist und zwischen den benachbarten zwei inneren Querrillen (3i) vorgesehen ist, um innere Blöcke (b2, b3) an der inneren Lauffläche (2i) zu bilden,

**dadurch gekennzeichnet, dass**

die innere Lauffläche (2i) darüber hinaus mit zusätzlichen Querrillen (5) versehen ist, die sich jeweils in der axialen Richtung des Reifens (1) zum Reifenäquator (C) von der ersten Längsrille (4a) zwischen den benachbarten inneren Querrillen (3i) erstrecken, wobei die inneren Blöcke (b2, b3), die zwischen den benachbarten inneren Querrillen (3i) angeordnet sind, umfassen:

kurze Blöcke (b2) mit einer Umfangslänge, die kleiner ist als ihre axiale Länge auf beiden Seiten der zusätzlichen Querrille (5), und

einen langen Block (b3) mit einer Umfangslänge, die größer ist als seine axiale Länge zwischen der inneren Laufflächenkante (Ti) und der ersten Längsrille (4a).

2. Luftreifen nach Anspruch 1, wobei

der Laufflächenabschnitt (2) eine axial äußere Lauffläche (2o) umfasst, die einen Bereich von dem Reifenäquator (C) zu einer äußeren Laufflächenkante (To) entsprechend der Außenseite des Fahrzeugs (M) bildet,

die Querrillen (3) eine Mehrzahl von äußeren Querrillen (3o) umfassen, die sich über die äußere Lauffläche (2o) hinweg erstrecken, und

zumindest drei der geneigten Längsrillen (7) zwischen den benachbarten zwei äußeren Querrillen (3o) vorgesehen sind, um lange Blöcke (b1) mit einer Umfangslänge zu bilden, die größer als ihre axiale Länge an der äußeren Lauffläche (2o) ist.

3. Luftreifen nach Anspruch 2, wobei

der Winkel ($\theta$) der Längsrillen (7) mit Bezug auf die Umfangsrichtung des Reifens nicht größer als 30 Grad ist,

die äußeren Querrillen (3o) sich zur Innenseite des Fahrzeugs (M) neigen, während sie sich zur Fahrtrichtung (F) erstrecken, wenn der Reifen (1) auf das Fahrzeug (M) aufgezogen ist und von oben betrachtet wird, und

der Neigungswinkel ($\theta8$) der äußeren Querrillen (3o) nicht größer als 30 Grad mit Bezug auf die axiale Richtung des Reifens (1) ist.

4. Luftreifen nach Anspruch 2, wobei

der Laufflächenabschnitt (2) eine axial innere Lauffläche (2i) umfasst, die einen Bereich von dem Reifenäquator (C) zu einer inneren Laufflächenkante (Ti) entsprechend der Innenseite des Fahrzeugs (M) bildet,

die Querrillen (3) eine Mehrzahl von inneren Querrillen (3i) umfassen, die sich über die innere Lauffläche (2i) hinweg erstrecken,

zumindest eine der Längsrillen (4) zwischen den benachbarten zwei inneren Querrillen (3i) vorgesehen ist, um innere Blöcke (b2, b3) an der inneren Lauffläche (2i) zu bilden, und

die äußeren Querrillen (3o) eine Rillenbreite aufweisen, die größer als die der inneren Querrillen (3i) ist.

**5.** Luftreifen nach Anspruch 1, wobei
die innere Lauffläche (2i) mit den Längsrillen (4) versehen ist, die die erste Längsrille (4a) und eine zweite Längsrille (4b) umfassen, die am nächsten bei der ersten Längsrille (4a) liegt,
die erste Längsrille (4a) sich parallel zur Umfangsrichtung des Reifens (1) erstreckt,
die zweite Längsrille (4b) sich zwischen den benachbarten Querrillen (3) erstreckt, sodass sie parallel zur Umfangsrichtung des Reifens (1) liegt oder sich zur Innenseite des Fahrzeugs (M) neigt, während sie sich zur Fahrtrichtung (F) erstreckt, wenn der Reifen (1) auf das Fahrzeug (M) aufgezogen ist und von oben betrachtet wird, und
der Winkel (θ2) der zweiten Längsrille (4b) mit Bezug auf die Umfangsrichtung des Reifens (1) nicht größer als der Winkel (θ4) der Längsrille (4d) benachbart zu der zweiten Längsrille (4b) an der Außenseite des Fahrzeugs (M) ist.

**6.** Luftreifen nach Anspruch 1, wobei die Rillenbreite der ersten Längsrille (4a) unter den Längsrillen (4) am größten ist.

**7.** Luftreifen nach Anspruch 5, wobei die Rillenbreite der ersten Längsrille (4a) unter den Längsrillen (4) am größten ist.

**8.** Luftreifen nach Anspruch 1, wobei sich jede Längsrille (4) im Wesentlichen gerade ohne Biegung erstreckt.

**9.** Luftreifen nach Anspruch 1, wobei die Zahl der geneigten Längsrillen (7) zwischen den benachbarten zwei Querrillen (3) in einem Bereich von dem Reifenäquator (C) zu einer äußeren Laufflächenkante (To) entsprechend der Außenseite des Fahrzeugs (M) zumindest drei beträgt.

**10.** Luftreifen nach Anspruch 1, wobei der Reifen (1) an seiner Außenfläche ein Identifikationsmittel aufweist, um die ausgewiesenen Richtungen zu identifizieren.


**Revendications**


**1.** Bandage pneumatique (1) comprenant
une portion formant bande de roulement (2) pourvue d'une pluralité de gorges latérales (3) et d'une pluralité de gorges longitudinales (4) s'étendant entre les gorges latérales (3) pour former un motif de blocs ayant une pluralité de blocs (B),
le motif de blocs étant conçu avec des directions vers l'intérieur et vers l'extérieur d'un véhicule et une direction de rotation quand le pneumatique est monté sur le véhicule,
les gorges longitudinales (4) comprenant au moins deux gorges longitudinales inclinées (7) s'étendant chacune entre deux gorges latérales adjacentes (3), et
quand le pneumatique (1) est monté sur le véhicule (M) et vu depuis le dessus :

les gorges longitudinales inclinées (7) sont inclinées vers l'intérieur du véhicule (M) tout en s'étendant vers une direction de circulation (F) du véhicule (M),
les gorges longitudinales inclinées (7) ont un angle d'inclinaison différent (θ) par rapport à la direction circonférentielle du pneumatique (1), et
chacune des gorges longitudinales inclinées (7) présente un angle d'inclinaison (θ) plus élevé que celui de la gorge intérieure adjacente,

dans lequel la portion formant bande de roulement (2) comprend une bande de roulement axialement intérieure (2i) formant une région à partir de l'équateur (C) du pneumatique jusqu'à un bord de roulement intérieur (Ti) correspondant à l'intérieur du véhicule (M),
les gorges latérales (3) incluent une pluralité de gorges latérales intérieures (3i) s'étendant à travers la bande de roulement intérieure (2i),
au moins une des gorges longitudinales (4) est une première gorge longitudinale (4a) la plus rapprochée du bord de roulement intérieur (Ti) et est prévue entre les deux gorges latérales intérieures adjacentes (3a) pour former des blocs intérieurs (b2, b3) sur la bande de roulement intérieure (2i), **caractérisé en ce que**
la bande de roulement intérieure (2a) est en outre pourvue de gorges latérales auxiliaires (5) s'étendant chacune dans la direction axiale du pneumatique (1) vers l'équateur (C) du pneumatique à partir de la première gorge longitudinale (4a) entre les gorges latérales intérieures adjacentes (3i), grâce à quoi les blocs intérieurs (b2, b3) situés entre les gorges latérales intérieures adjacentes (3i) incluent :

des blocs courts (b2) ayant une longueur circonférentielle plus petite que leur longueur axiale sur les deux côtés de la gorge latérale auxiliaire (5), et

des blocs longs (b3) ayant une longueur circonférentielle supérieure à leur longueur axiale entre le bord de roulement intérieur (Ti) et la première gorge longitudinale (4a).

2. Bandage pneumatique selon la revendication 1, dans lequel
la portion formant bande de roulement (2) comprend une bande de roulement axialement extérieure (2o) formant une région à partir de l'équateur (C) du pneumatique jusqu'à un bord de roulement extérieur (To) correspondant à l'extérieur du véhicule (M),
les gorges latérales (3) incluent une pluralité de gorges latérales extérieures (3o) s'étendant à travers la bande de roulement extérieure (2o), et
au moins trois des gorges longitudinales inclinées (7) sont prévues entre les deux gorges latérales extérieures adjacentes (3o) pour former des blocs longs (b1) ayant une longueur circonférentielle supérieure à leur longueur axiale sur la bande de roulement extérieure (2o).

3. Bandage pneumatique selon la revendication 2, dans lequel
l'angle (θ) des gorges longitudinales (7) n'est pas supérieur à 30° par rapport à la direction circonférentielle du pneumatique,
les gorges latérales extérieures (3o) s'inclinent vers l'intérieur du véhicule (M) tout en s'étendant vers la direction de circulation (F), quand le pneumatique (1) est monté sur le véhicule (M) et vu depuis le dessus, et
l'angle d'inclinaison (θ8) des gorges latérales extérieures (3o) n'est pas supérieur à 30° par rapport à la direction axiale du pneumatique (1).

4. Bandage pneumatique selon la revendication 2, dans lequel
la portion formant bande de roulement (2) comprend une bande de roulement axialement intérieure (2i) formant une région à partir de l'équateur du pneumatique (C) vers un bord de roulement intérieur (Ti) correspondant à l'intérieur du véhicule (M),
les gorges latérales (3) incluent une pluralité de gorges latérales intérieures (3i) s'étendant à travers la bande de roulement intérieure (2i),
au moins une des gorges longitudinales (4) est prévue entre les deux gorges latérales intérieures adjacentes (3i) pour former des blocs intérieurs (b2, b3) sur la bande de roulement intérieure (2i), et
les gorges latérales extérieures (3o) ont une largeur supérieure à celle des gorges latérales intérieures (3i).

5. Bandage pneumatique selon la revendication 1, dans lequel
la bande de roulement intérieure (2i) est pourvue de gorges longitudinales (4) qui incluent la première gorge longitudinale (4a) et une seconde gorge longitudinale (4b) qui suit la première gorge longitudinale (4a),
la première gorge longitudinale (4a) s'étend parallèlement à la direction circonférentielle du pneumatique (1),
la seconde gorge longitudinale (4b) s'étend entre les gorges latérales adjacentes (3) de manière à être parallèle à la direction circonférentielle du pneumatique (1) ou à s'incliner vers l'intérieur du véhicule (M) tout en s'étendant vers la direction de circulation (F) quand le pneumatique (1) est monté sur le véhicule (M) et qu'on le voit depuis le dessus, et l'angle (θ2) de la seconde gorge longitudinale (4b) par rapport à la direction circonférentielle du pneumatique (1) n'est pas supérieur à l'angle (θ4) de la gorge longitudinale (4d) adjacente à la seconde gorge longitudinale (4b) à l'extérieur du véhicule (M).

6. Bandage pneumatique selon la revendication 1, dans lequel la largeur de la première gorge longitudinale (4a) est la plus élevée parmi les gorges longitudinales (4).

7. Bandage pneumatique selon la revendication 5, dans lequel la largeur de la première gorge longitudinale (4a) est la plus élevée parmi les gorges longitudinales (4).

8. Bandage pneumatique selon la revendication 1, dans lequel
chaque gorge longitudinale (4) s'étend sensiblement en ligne droite sans courbure.

9. Bandage pneumatique selon la revendication 1, dans lequel
le nombre de gorges longitudinales inclinées (7) entre les deux gorges latérales adjacentes (3) est au moins égal à trois dans une région depuis l'équateur (C) du pneumatique jusqu'à un bord de roulement extérieur (To) correspondant à l'extérieur du véhicule (M).

10. Bandage pneumatique selon la revendication 1, dans lequel
le pneumatique (1) comprend des moyens d'identification pour identifier les directions de conception sur sa surface

extérieure.

# FIG.1

# FIG.2

FIG.3

EP 1 992 503 B1

# FIG.4

EP 1 992 503 B1

**FIG.5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6607018 B1
- EP 1110761 A